# EUROPÄISCHE PATENTSCHRIFT

(11) **EP 1 090 433 B1**
(45) Veröffentlichungstag und Bekanntmachung des Hinweises auf die Patenterteilung: **03.04.2002**
(21) Anmeldenummer: 98938619.8
(22) Anmeldetag: 23.06.1998
(51) Int. Cl.: H01M 2/16, H01M 10/34, H01M 10/06

(54) **SEPARATOR FÜR GESCHLOSSENE BLEIAKKUMULATOREN**
SEPARATOR FOR SEALED LEAD STORAGE BATTERIES
SEPARATEUR DESTINE A UN ACCUMULATEUR AU PLOMB FERME

(43) Veröffentlichungstag der Anmeldung: 11.04.2001
(73) Patentinhaber: DARAMIC, INC., North Charleston, SC 29406 (US)
(72) Erfinder: BÖHNSTEDT, Werner, D-24558 Henstedt-Ulzburg (DE); DEITERS, Jörg, D-22846 Norderstedt (DE); IHMELS, Klaus, Heinrich, D-22303 Hamburg (DE); RUHOFF, Jürgen, D-22848 Norderstedt (DE)
(74) Vertreter: UEXKÜLL & STOLBERG
(86) Internationale Anmeldenummer: EP9803790
(87) Internationale Veröffentlichungsnummer: WO9967831

(56) Entgegenhaltungen:
- EP-A- 0 814 520
- WO-A-94/18710
- WO-A-94/20995
- WO-A-95/13316
- DE-A- 1 496 123
- DE-A- 2 720 250
- DE-A- 19 702 757
- US-A- 5 336 573
- US-A- 5 362 582
- US-A- 5 720 780

## Beschreibung

Die vorliegende Erfindung betrifft poröse Separatoren, die sich insbesondere für geschlossene Blei-Schwefelsäure-Akkumulatoren eignen.

Bei Akkumulatoren und Batterien mit sauren Elektrolyten, wie beispielsweise bei Blei-Schwefelsäure-Akkumulatoren, werden Batterieseparatoren verwendet, um einen direkten Kontakt zwischen den entgegengesetzt geladenen Elektroden-Platten zu verhindern und um das Auftreten von Kurzschlüssen zwischen den Platten durch Metallpartikel zu unterdrücken.

Die Separatoren bestehen aus einem nicht-leitenden Material, das einen elektrolytischen Stromtransport gewährleistet. Batterieseparatoren sollen einen geringen elektrischen Widerstand aufweisen, d.h. den ionischen Stromfluß möglichst ungehindert passieren lassen.

Darüber hinaus müssen Batterieseparatoren gegenüber den chemischen und physikalischen Bedingungen innerhalb der Batterie, d.h. gegenüber oxidativen und sauren Bedingungen sowohl bei Umgebungs- als auch bei erhöhter Temperatur beständig sein.

Für Anwendungen mit hohem Energie- und Leistungsbedarf, wie z.B. in Elektrofahrzeugen, besteht ein Bedarf an kompakten, wartungsfreien Akkumulatoren mit hoher Kapazität. Die Erzielung hoher Leistungen bei kompakter Bauweise erfordert möglichst geringe Abstände zwischen den Elektrodenplatten und damit möglichst dünne Separatoren.

Bei neueren Entwicklungen von geschlossenen Bleibatterien wird auf einen freien Elektrolyten ganz verzichtet und der Raum zwischen den Elektrodenplatten vollständig durch den Separator ausgefüllt. Der Elektrolyt wird dabei von dem Separator absorbiert. Aufgrund der geringen Elektrodenabstände und der dadurch bedingten geringen Separatorendicke sind zur Gewährleistung einer ausreichenden Säuremenge für die elektrochemische Umsetzung Materialien mit einem hohen Säureabsorptionsvermögen erforderlich.

Um bei dieser Bauweise einen gleichmäßigen Stromfluß sicherzustellen und um ein Austrocknen der Elektroden zu verhindern, muß über die gesamte Elektrodenoberfläche ein guter Kontakt zwischen Elektroden und Separator sichergestellt werden. Hierzu werden Elektroden und Separatoren unter Druck zusammengesetzt. Gleichzeitig wird auf diese Weise eine hohe Lebensdauer der Batterie gewährleistet, da ein mangelhafter elektrischer Kontakt zwischen den Bleidioxid-Partikeln der aktiven Masse der positiven Elektrode und zwischen Aktivmasse und Stromableitungsgitter eine Verminderung der Masseausnutzung und damit einen vorzeitigen Kapazitätsverlust mit einer geringen Zyklenlebensdauer bedingt.

Im Hinblick auf eine angestrebte Wartungsfreiheit werden solche Akkumulatoren gewöhnlich in geschlossener Form hergestellt. Dies erfordert geeignete Maßnahmen zur Verhinderung des Wasserverbrauchs durch das Entweichen von Sauerstoff und Wasserstoff, die während des Ladevorgangs durch Zersetzung des Wassers gebildet werden können. Im Idealfall wird der an der positiven Elektrode gebildete Sauerstoff vollständig an der negativen Elektrode verzehrt und dadurch ein Wasserverbrauch infolge des Ladevorgangs verhindert. Der Sauerstofftransport erfolgt im allgemeinen durch Diffusion des gasförmigen Sauerstoffs durch den Separator. Hierzu muß der Separator offene Kanäle mit geeigneter Porengröße aufweisen.

Die US-A 3 862 861 und GB 1 364 283 offenbaren geschlossene Bleiakkumulatoren, welche als Separatoren Glasfasermatten enthalten. Glasfaserseparatoren neigen beim Laden und Entladen der Batterie zur Ausbildung einer Säureschichtung, d.h. Schichten unterschiedlicher Konzentration innerhalb des Separators, was zu einem vorzeitigen Kapazitätsverlust der Batterie führt. Außerdem kommt es durch Gravitationskräfte zur Ausbildung eines Füllprofils, d.h. einer Anreicherung der Säure im unteren Teil des Separators. Hierdurch wird die Bauhöhe der Batterie begrenzt und wie bei der Säureschichtung ein vorzeitiger Kapazitätsverlust der Batterie bedingt. Glasfasern brechen beim Zusammenpressen der Elektrodenplatten leicht, was mit einem Verlust an Rückstellkraft und einer Abnahme des auf die Platten ausgeübten Drucks verbunden ist. Aufgrund ihrer geringen Reißdehnung sind Glasfasermatten außerdem nur schwer zu verarbeiten. Sie sind nicht verschweißbar und lassen sich damit nicht als Taschenseparatoren einsetzen. Besonders nachteilig ist, daß Fasermatten stark komprimierbar sind und somit eine druckabhängige Porengröße und Porosität aufweisen. Zudem ist die Verwendung anorganischer Fasern mit Durchmessern unter 1 µm aus gesundheitlichen Gründen nicht unbedenklich.

Zur Überwindung einiger dieser Nachteile werden gemäß der US-A-4 908 282 Mischungen aus Glasfasern und organischen Fasern vorgeschlagen. Die Verwendung organischer Fasern bedingt jedoch ein geringeres Säureabsorptionsvermögen des Separators und damit eine verminderte Kapazität der Batterie.

Weiterhin sind geschlossene Batterien auf Gelbasis bekannt. Hierbei wird die Säure zwischen den Elektrodenplatten durch Zugabe von Geliermitteln in ein Gel überführt. Zur elektronischen Trennung der Platten enthalten die Batterien zusätzlich mikroporöse Separatoren. Gelsysteme zeigen nur eine sehr geringe Säureschichtung und kein Füllprofil, sind jedoch durch den Gelfüllprozeß aufwendig und damit teuer in der Herstellung. Der Sauerstofftransport erfolgt durch Risse in dem Gel, die erst beim Gebrauch entstehen, so daß Gelbatterien anfänglich nur eine geringe Sauerstofftransferrate aufweisen.

Die DE-C-27 20 250 offenbart die Verwendung von feinverteilter Kieselsäure zur Gelbildung. Diese wird in Form von Preßkörpern zwischen die Elektrodenplatten gebracht, die bei Zugabe der Säure zu einem hochviskosen Gel quellen. Die Festigkeit der Preßkörper kann durch Armierung mit säurefesten und oxidationsbeständigen Fasern verbessert werden, trotzdem sind die Separatoren brüchig und nur schwierig zu handhaben.

Die WO 94/20995 offenbart u.a. Separatoren für geschlossene Batterien, welche eine mikroporöse Matrix auf Basis eines thermoplastischen Polymers aufweisen. Das thermoplastische Polymer enthält einen inerten Füller und einen Weichmacher, wobei als Polymer ultrahochmolekulare Polyolefine und als Füller zur Anwendung in Batterien mit sauren Elektrolyten gefälltes Siliciumdioxid bevorzugt sind. Die Verwendung von gefälltem Siliciumdioxid erfordert jedoch den Einsatz einer in Bezug auf den Polymergehalt hohen Füllstoffmenge, um die gewünschte Porosität zu erreichen. Durch das ungünstige Verhältnis von Füllstoff zu Polymer werden die mechanischen Eigenschaften und die Oxidationsstabilität des Separators stark vermindert, so daß formstabile Schichten zur Verstärkung eingesetzt werden müssen. Hierzu werden vorzugsweise Glasfasermatten verwendet, die zumindest teilweise in die Polymerschicht eingebettet sind. Die Herstellung der Separatoren ist aufgrund ihrer mehrschichtigen Struktur aufwendig.

Das US-A-4 335 193 offenbart Batterieseparatoren, die 40 bis 90 Vol.% Polyolefin mit einem durchschnittlichen Molekulargewicht von 15 000 bis < 300 000 und 10 bis 60 Vol.% anorganischen Füller, vorzugsweise Siliciumdioxid, enthalten. Die Separatoren weisen eine Porosität von 30 bis maximal 75 Vol.%, vorzugsweise 45 bis 65 Vol.% auf und zeichnen sich durch einen elektrischen Widerstand von weniger als 0,0006 Ωxdm²/Separator aus. Nachteilig an diesen Separatoren ist ihre geringe mechanische Stabilität und schlechte Oxidationsbeständigkeit, insbesondere bei hohen Füllstoffgehalten.

Aufgabe der vorliegenden Erfindung ist die Schaffung von Separatoren für geschlossene Bleiakkumulatoren, welche die oben geschilderten Nachteile nicht aufweisen und insbesondere eine geringe Kompressibilität, eine geringe Neigung zur Säureschichtung und Bildung eines Füllprofils, ein hohes Säureabsorptionsvermögen sowie eine hohe Porosität und Sauerstofftransferrate zeigen und welche einfach herstellbar sind.

Die Aufgabe wird durch einen mikroporösen Batterieseparator auf Basis einer im wesentlichen homogenen Mischung aus einem thermoplastischen Polymer, einem inerten Füllstoff und gegebenenfalls einem Weichmacher gelöst. Der Separator ist dadurch gekennzeichnet, daß er als Füllstoff pyrogene Kieselsäure in einer Menge von mindestens 20 Vol.% und ggf. weitere Füllstoffe enthält, so daß der Füllstoffgehalt insgesamt mehr als 60 Vol.% bis maximal 82 Vol.%, vorzugsweise 67 bis 80 Vol.%, besonders bevorzugt 68 bis 77 Vol.% beträgt.

Diese und wenn nicht anders angegeben alle anderen Prozentangaben beziehen sich jeweils auf das massive Separatormaterial ohne Berücksichtigung des durch die Poren bedingten Leervolumens.

Füllstoffhaltige mikroporöse Batterieseparatoren auf Basis eines thermoplastischen Polymers sind beispielsweise aus der DE-B-14 96 123 und der US-A-3 351 495 bekannt. Es wurde völlig überraschend gefunden, daß bei der Verwendung von pyrogener Kieselsäure als Füllstoff Separatoren mit den genannten Eigenschaften erhalten werden können.

Die erfindungsgemäßen Batterieseparatoren enthalten vorzugsweise mindestens 30 Vol.% pyrogene Kieselsäure, besonders bevorzugt mindestens 45 Vol.% und ganz besonders bevorzugt mehr als 60 Vol.% pyrogene Kieselsäure. Separatoren, die ausschließlich pyrogene Kieselsäure als Füllstoff enthalten, sind am meisten bevorzugt.

Die pyrogene Kieselsäure weist vorzugsweise einen durchschnittlichen Teilchendurchmesser von 4 bis 50 nm, besonders bevorzugt 5 bis 40 nm und insbesondere 6 bis 20 nm auf.

Die Oberfläche der pyrogenen Kieselsäure beträgt vorzugsweise 50 bis 500 m²/g, besonders bevorzugt 130 bis 450 m²/g und insbesondere 200 bis 400 m²/g.

Der Gehalt an weiteren Füllstoffe in der zu extrudierenden Grundmasse beträgt 0 bis 62 Vol.%, vorzugsweise 0 bis 52 Vol.% und besonders bevorzugt 0 bis 37 Vol.%.

Als weiterer Füllstoff eignen sich besonders gefällte Kieselsäure, vorzugsweise solche mit einer mittleren Teilchengröße von 1 bis 150 µm und einer BET-Oberfläche von 60 bis 700 m²/g, und/- oder solche Stoffe, die in dem Elektrolyten des Akkumulators löslich sind, insbesondere lösliche Sulfate, wie z.B. der Alkali- und Erdalkalimetalle, insbesondere Natriumsulfat, Kaliumsulfat und Magnesiumsulfat, sowie Aluminiumsulfat. Durch die Verwendung löslicher Füllstoffe kann die Porosität und die Säureabsorption des Separators weiter erhöht werden. Außerdem werden durch lösliche Füllstoffe Kurzschlüsse zwischen den Elektroden-platten verhindert. Als im Elektrolyten unlösliche Füllstoffe eignen sich weiterhin die in der DE-B-14 96 123 offenbarten Füllstoffe, insbesondere Oxide und Hydroxide des Siliciums, Aluminiums und Titans sowie Glimmer, Talkum, Silikate und Glaskugeln.

Die erfindungsgemäßen Batteriescheider enthalten vorzugsweise 18 Vol.% bis < 40 Vol.%, besonders bevorzugt 20 Vol.% bis 33 Vol.%, und ganz besonders bevorzugt 23 Vol.% bis 32 Vol.% mindestens eines thermoplastischen Polymers.

Geeignete thermoplastische Polymere werden in der US-A-3 351 495 und der DE-B-14 96 123 beschrieben. Auf die Offenbarung in diesen Druckschriften wird hiermit ausdrücklich Bezug genommen.

Bevorzugte thermoplastische Polymere sind ultrahochmolekulare Polyolefine, insbesondere ultrahochmolekulares Polyethylen mit einem mittleren gewichtsmäßigen Molekulargewicht von mindestens 300 000, vorzugsweise mindestens 1 000 000 und insbesondere etwa 3 bis 8 · 10⁶. Der Standardbelastungs-Schmelzindex des Polyolefins beträgt im wesentlichen 0, d.h. er ist kleiner als 0,1 und vorzugsweise kleiner als 0,01. Die reduzierte Viskosität des Polyolefins beträgt nicht weniger als 4,0 und liegt vorzugsweise über 10 und insbesondere über 15 dl/g. Hinsichtlich der Bestimmung von Standardbelastungs-Schmelzindex und reduzierter Viskosität wird auf die oben genannte US-A-3 351 495 bzw. die DE-B 1 496 123 verwiesen. Wie in diesen Druckschriften erläutert, können auch Polyolefingemische verwendet werden. Neben Polyethylen sind insbesondere auch Polypropylen, Polybuten, Polystyrol, Ethylen-Propylen-Copolymere, Ethylen-Hexylen-Copolymere, Ethylen-Buten-Copolymere, Propylen-Buten-Copolymere, Ethylen-Propylen-Buten-Copolymere und Copolymere aus Ethylen oder Propylen mit einer ethylenisch ungesättigten Monocarbonsäure, nämlich Acrylsäure, Methacrylsäure oder deren Gemische geeignet.

Das Volumenverhältnis von Polymer zu Füllstoff beträgt vorzugsweise 0,22 bis 0,64 und insbesondere 0,35 bis 0,55.

Als Weichmacher sind besonders die in der DE 12 67 423 aufgeführten Flüssigkeiten, insbesondere Ester, wie beispielsweise Sebacate, Fumarate, Phthalate, Epoxyverbindungen und Polyester; Phosphatester; Kohlenwasserstoffe, wie beispielsweise Paraffinöle und niedere Polymere wie Polyisobutylen und Poylbutadien; chlorierte Kohlenwasserstoffe sowie Sulfonamide, Cumaron-Indenverbindungen und Asphalt geeignet. Ganz besonders bevorzugt sind durch organische Lösungsmittel extrahierbare Weichmacher sowie wasserunlösliche Öle wie Prozeßöle.

Der Gehalt des Weichmachers in dem fertigen Batterieseparator beträgt 0 bis 20 Gew.%, vorzugsweise 2 bis 15 Gew.% und insbesondere 5 bis 8 Gew.% bezogen auf die Gesamtmasse an thermoplastischen Polymer und Füllstoff.

Die erfindungsgemäßen Batterieseparatoren enthalten somit vorzugsweise mindestens 20 Vol.% pyrogene Kieselsäure, 0 bis 62 Vol.% sonstige Füllstoffe, wobei der Gesamtfüllstoffgehalt >60 bis 82 Vol.% beträgt, 18 bis <40 Vol.% thermoplastisches Polymer und, bezogen auf die Gesamtmasse an Füllstoff und Polymer, 0 bis 20 Gew.-% Weichmacher.

Außer den genannten Bestandteilen können die erfindungsgemäßen Separatoren übliche Zusätze wie Antioxidantien (gewöhnlich 0,1 bis 2,0 Vol.%), Gleitmittel, Antistatika, Pigmente, Farbstoffe, Ruß, Stabilisatoren, Lichtschutzmittel und dergleichen enthalten.

Ein besonders bevorzugter Batterieseparator enthält von 23 bis 32 Vol.% Polyolefin mit einem Molekulargewicht von 3 bis 8 · 10⁶ g/mol, 68 bis 77 Vol.% Füllstoff, vorzugsweise pyrogene Kieselsäure, und, bezogen auf die Gesamtmasse an Polyolefin und Füllstoff, 5 bis 8 Gew.% Weichmacher.

Die erfindungsgemäßen Separatoren weisen keine oder nur eine sehr geringe Kompressibilität auf. Ein Druck von 1 bar bewirkt eine Abnahme der Dicke des Separators von maximal ca. 3 %, typischerweise ca. 2 %.

Die geringe Kompressibilität gewährleistet eine starke Rückstellkraft und damit einen guten Kontakt zwischen Separator und Elektrodenoberfläche.

Die Separatoren sind gegenüber Druckbelastungen sehr stabil. Selbst Drücke von 3 bar führen zu keiner Zerstörung der Separatorstruktur oder einer Abnahme der Rückstellkraft. Sie erlauben damit die Herstellung von Akkumulatoren mit einer hohen Zyklenlebensdauer, d.h. einer hohen Anzahl von möglichen Ladungs- und Entladungsvorgängen, die sich besonders für zyklische Belastungen wie beispielsweise in Elektrofahrzeugen eignen.

Aufgrund der geringen Kompressibilität sind sowohl die Porosität als auch das Säureabsorptionsvermögen der Separatoren über große Bereiche vom Druck auf den Separator weitgehend unabhängig.

Die Porosität (Leervolumen) der erfindungsgemäßen Separatoren beträgt vorzugsweise 77 bis 90 %, besonders bevorzugt 78 bis 88 % und insbesondere etwa 80 bis 85%, bezogen auf das Gesamtvolumen des Separators.

Zur Bestimmung der Porosität wird eine Separatorprobe der Mindestgröße 40 x 70 mm im Ofen bei 110 °C für 30 min getrocknet und nach der Entnahme aus dem Ofen sofort gewogen (Gewicht G1). Anschließend wird die Probe für 15 min in kochende Netzmittellösung, dann an einem Drahthaken hängend vollständig in Wasser getaucht und das Gewicht in Wasser ermittelt (Gewicht G2). Danach wird die Probe vom Haken genommen, das Oberflächenwasser abgetupft und die Probe sofort gewogen (Gewicht G3). Die Porosität errechnet sich anhand der Formel: Porosität [%] = {(G3 - G1) / (G3 - G2)} x 100 %.

Zur Bestimmung der Porenverteilung wird mittels eines Porosimeters (Porosimeter Modell 2000, Fa. Carlo Erba) Quecksilber mit Druck in die Poren des Separators gefüllt. Durch Auswertung der Rohdaten mit der MILESTONE 200 Software werden das Porenvolumen und die -verteilung bestimmt.

Die Separatoren weisen vorzugsweise eine mittlere Porengröße von 0,1 bis 0,3 µm besonders bevorzugt 0,15 bis 0,25 µm und insbesondere von ca. 0,2 µm auf. Der Anteil der Poren mit einem Durchmesser ≤ 1 µm beträgt vorzugsweise etwa 80 bis 90 %, der Anteil der Poren ≥ 1 µm 10 bis 20 %. Durch Strecken des extrahierten Separators läßt sich der Anteil der großen Poren bis auf 50 %, die Porosität auf ca. 90 % und die mittlere Porengröße auf ca. 0,94 µm steigern.

Zur Bestimmung der Säureabsorption wird ein Streifen des Separators vollständig in Schwefelsäure der Dichte 1,28 g/cm³ eingetaucht und nach 24 h (mit oder ohne Vakuum) entnommen. Die Oberfläche des Separators wird getrocknet und die Säureabsorption in g Säure pro g Separator (g/g) ermittelt. Über das Flächengewicht (g/m2) läßt sich die Säureabsorption in g Säure pro m² Separator berechnen.

Das Säureabsorptionsvermögen der erfindungsgemäßen Separatoren beträgt vorzugsweise 2,8 bis 4,0 g/g, besonders bevorzugt etwa 3,0 g/g (ohne Vakuum) bzw. 2,9 bis 4,2 g/g, besonders bevorzugt 3,1 g/g (mit Vakuum). Ein Separator mit einer Dicke von 1 mm weist damit beispielsweise ein Säureabsorptionsvermögen von mindestens etwa 800 g/m², vorzugsweise 900 g/m² und insbesondere ca. 980 g/m² auf (mit Vakkuum).

Die erfindungsgemäßen Separatoren erlauben eine ungestörte Diffusion des an der positiven Elektrode gebildeten Sauerstoffs zur negativen Elektrode. Der Sauerstofftransport wird vermutlich durch freie, d.h. nicht mit Säure gefüllten, Poren in dem Separator gewährleistet. Es wird angenommen, daß aufgrund der Porengrößenverteilung die Säureaufnahme durch die Separatoren in zwei Stufen stattfindet. Beim Eintauchen eines Separators in Säure wird diese zunächst hauptsächlich von den größeren Poren aufgenommen. Wird der Separator dann vor dem Erreichen der Sättigungskapazität aus der Säure entfernt, findet aufgrund der Kapillarkräfte eine Umverteilung der Säure von den großen zu den kleineren Poren statt, so daß ein Teil der größeren Poren im wesentlichen säurefrei bleibt. Diese größeren, ungefüllten Poren sind wahrscheinlich für den Sauerstofftransport von der positiven zur negativen Elektrode verantwortlich. Wenn diese Poren größer als die Poren in den aktiven Massen der Elektrodenplatten sind, bleibt dieser Zustand während der gesamten Lebensdauer der Batterie erhalten.

Der Anteil der ungefüllten, großen Poren kann durch Variation der Porengrößenverteilung und des Säuregehalts bzw. -sättigungsgrads eingestellt werden. Ihr Anteil wird so gewählt, daß ein vollständiger Transport des an der positiven Elektrode gebildeten Sauerstoffs zur negativen Elektrode gewährleistet ist, so daß dort möglichst der gesamte Sauerstoff verzehrt wird und somit kein Wasserverbrauch des Akkumulators nachweisbar ist.

Der Säuregehalt bzw. -sättigungsgrad ist von der Behandlungszeit des Separators mit der Säure abhängig und kann daher z.B. durch eine zeitliche Kontrolle der Säurebehandlung gesteuert werden. Beispielsweise absorbiert ein Separator der Zusammensetzung 69,8 Vol.% pyrogene Kieselsäure, 30,2 Vol.% Polyethylen, welcher bezogen auf die Gesamtmasse an pyrogener Kieselsäure und Polyethylen 5 Gew.% Öl enthält, innerhalb von etwa 1 bis 5 Minuten etwa 90 % der insgesamt möglichen Säuremenge. Eine vollständige Sättigung des Separators wird nach etwa 1 bis 24 Stunden erreicht. Zur Gewährleistung einer ausreichenden Sauerstofftransportrate wird dieser Separator beispielsweise nach ca. 5 min aus der Säure entnommen.

Der gewünschte Säuregehalt läßt sich aber z.B. auch dadurch erzielen, daß der Separator mit einer vorbestimmten Säuremenge getränkt wird.

Zur Messung der Geschwindigkeit der Säureabsorption wird ein Streifen des Separators für unterschiedliche Zeiten vollständig in Schwefelsäure eingetaucht. Anschließend wird die Oberfläche des Separators getrocknet und die Säureabsorption in g Säure pro g Separator (g/g) ermittelt.

Der hohe Anteil an kleinen Poren der erfindungsgemäßen Separatoren verhindert aufgrund der wirksamen Kapillarkräfte außerdem sowohl die Entstehung eines Säurefüllprofils als auch die Ausbildung von Säureschichten unterschiedlicher Dichte im Separator beim Laden und Entladen der Batterie und damit einen dadurch bedingten vorzeitigen Kapazitätsabfall des Akkumulators. Dieser Vorgang wird vermutlich durch Gelbildung unterstützt, die aus der Expansion der Separatoren in Säure ableitbar ist.

Die erfindungsgemäßen Separatoren lassen sich beispielsweise auf die in der in der US-A-3 351 495, DE-B-14 96 123 oder EP-B-0 425 784 beschriebenen Weise, d.h. insbesondere durch Extrusion und anschließende Extraktion, herstellen. Das erfindungsgemäße Material wird vorzugsweise in Form einer Bahn extrudiert und dann auf die gewünschten Formen zugeschnitten. Das Material läßt sich problemlos, beispielsweise durch Verschweißen oder Rändeln, zu Separatortaschen verarbeiten.

Die Dicke der Separatoren wird maßgeblich von der Art der Batterie, in welcher der Separator verwendet werden soll, bestimmt. Bei Schwefelsäure-Akkumulatoren ist eine Dicke von 0,1 bis 3,0 mm, insbesondere von 0,2 bis 1,5 mm bevorzugt.

Die erfindungsgemäßen Separatoren weisen bei einer Dicke von 1,0 mm vorzugsweise einen elektrischen Widerstand von 50 bis 150 mΩxcm², besonders bevorzugt weniger als 125 mΩ×cm² auf.

Die Separatoren zeigen ferner eine hohe Reißdehnung. Diese beträgt vorzugsweise 50 bis 200 %, insbesondere etwa 100 %. Zur Messung der Reißdehnung wird ein Schulterstabprobekörper nach DIN 53 455 mittels einer Zugprüfungsmaschine mit einer Prüfgeschwindigkeit von 305 mm/min bis zum Bruch gedehnt.

Darüber hinaus weisen die erfindungsgemäßen Batterieseparatoren eine hohe Formbeständigkeit gegenüber Säuren auf. Die Dimensionsänderung in Säure beträgt gewöhnlich mehr als etwa -1 %, vorzugsweise ±0 % bis zu +2 %, sowohl in als auch quer zur Maschinenrichtung. Zur Bestimmung der Dimensionsänderung wird der Separator für 3 Stunden in Säure bei 77 °C gelagert, für 5 min bei Raumtemperatur gewässert und anschließend die Dimensionsänderung in Maschinenrichtung (machine direction, MD) und quer zur Maschinenrichtung (cross machine direction, CMD) vermessen.

Die erfindungsgemäßen Separatoren eignen sich besonders zur Herstellung geschlossener Blei-Schwefelsäure-Akkumulatoren, insbesondere Akkumulatoren mit festgelegtem Elektrolyten. Gegenstand der Erfindung sind daher auch Batterien, insbesondere Blei-Schwefelsäure-Akkumulatoren, die unter Verwendung der erfindungsgemäßen mikroporösen Separatoren hergestellt sind.

Im folgenden wird die Erfindung anhand von Ausführungsbeispielen näher erläutert.

### Beispiele

### Beispiel 1

8,84 g pyrogene Kieselsäure mit einer BET-Oberfläche von 200 m²/g und einem Primärpartikeldurchmesser von 12 nm (Aerosil® 200, Fa. Degussa), 1,25 g Polyethylen mit einem Molekulargewicht von 5,6·10⁶ g/mol (Hostalen® GUR 4130, Fa. Hoechst) und 40,0 g eines naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 76,6 Vol.% Füllstoff und 23,4 Vol.% Polyethylen zusammen. Der elektrische Widerstand beträgt 19 mΩ×cm², die Säureabsorption 3,4 g/g, die Porosität 80 %, der mittlere Porendurchmesser 0,19 µm, der Anteil der Poren ≤ 1 µm 88 % und der Anteil der Poren > 1 µm 12 %.

### Beispiel 2

8,84 g pyrogene Kieselsäure mit einer BET-Oberfläche von 300 m²/g und einem Primärpartikeldurchmesser von 7 nm (Aerosil® 300, Fa. Degussa), 1,25 g Polyethylen mit einem mittleren Molekulargewicht von 5,6-106 g/mol (Hostalen® GUR 4130, Fa. Hoechst) und 40,0 g naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 76,6 Vol.% Füllstoff und 23,4 Vol.% Polyethylen zusammen. Der elektrische Widerstand beträgt 18 mΩ×cm², die Säureabsorption 3,6 g/g, die Porosität 83 %, der mittlere Porendurchmesser 0,19 zm, der Anteil der Poren < 1 µm 84 % und der Anteil der Poren > 1 um 16 %.

### Beispiel 3

8,84 g pyrogene Kieselsäure mit einer BET-Oberfläche von 380 m²/g und einem Primärpartikeldurchmesser von 7 nm (Aerosil® 380, Fa. Degussa), 1,25 g Polyethylen mit einem mittleren Molekulargewicht von 5,6.10⁶ g/mol (Hostalen® GUR 4130, Fa. Hoechst) und 40,0 g naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 76,6 Vol.% Füllstoff und 23,4 Vol.% Polyethylen zusammen. Der elektrische Widerstand beträgt 15 mΩxcm², die Säureabsorption 3,5 g/g, die Porosität 82 %, der mittlere Porendurchmesser 0,21 µm, der Anteil der Poren < 1 µm 85 % und der Anteil der Poren > 1 µm 15 %.

### Beispiel 4

8,48 g pyrogene Kieselsäure mit einer BET-Oberfläche von 300 m²/g und einem Primärpartikeldurchmesser von 7 nm (Aerosil® 300, Fa. Degussa), 2,1 g Polyethylen mit einem mittleren Molekulargewicht von 5,6-10⁶ g/mol (Hostalen® GUR 4130, Fa. Hoechst), und 39,5 g naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 65,0 Vol.% Füllstoff und 35 Vol.% Polyethylen zusammen. Der elektrische Widerstand beträgt 29 mΩ×cm², die Säureabsorption 3,1 g/g, die Porosität 81 %, der mittlere Porendurchmesser 0,15 µm, der Anteil der Poren < 1 µm 90 % und der Anteil der Poren > 1 µm 10 %.

### Beispiel 5

9,14 g pyrogene Kieselsäure mit einer BET-Oberfläche von 300 m²/g und einem Primärpartikeldurchmesser von 7 nm (Aerosil® 300, Fa. Degussa), 0,95 g Polyethylen mit einem mittleren Molekulargewicht von 5,6·10⁶ g/mol (Hostalen® GUR 4130, Fa. Hoechst) und 40,0 g naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 82,0 Vol.% Füllstoff und 18,0 Vol.% Polyethylen zusammen. Der elektrische Widerstand beträgt 22 mΩ×cm², die Säureabsorption 3,7 g/g, die Porosität 85 %, der mittlere Porendurchmesser 0,17 µm, der Anteil der Poren < 1 µm 88 % und der Anteil der Poren > 1 µm 12 %.

### Beispiel 6

843,5 g pyrogene Kieselsäure mit einer BET-Oberfläche von 300 m²/g und einem Primärpartikeldurchmesser von 7 nm (Aerosil® 300, Fa. Degussa), 165,0 g Polyethylen mit einem mittleren Molekulargewicht von 5,6-10⁶ g/mol (Hostalen® GUR 4130, Fa. Hoechst) und 4000 g naphthenischen Prozeßöls (Shellflex FC 451, Fa. Shell) wurden in einem Doppelschneckenextruder mit Breitschlitzdüse extrahiert und in einem der Düse nachgeschalteten, beheizten Walzwerk auf 1 mm Dicke kalandriert. Das Blatt wurde mit Hexan bei Raumtemperatur bis auf 5 Gew.% Öl extrahiert. Der extrahierte Separator setzt sich aus 69,8 Vol.% Füllstoff, 30,2 Vol.% Polyethylen und, bezogen auf die Gesamtmasse aus Polyethylen und Füllstoff, 5,0 Gew.% Öl zusammen. Der elektrische Widerstand beträgt 110 mΩ×cm², die Säureabsorption 3,0 g/g, die Porosität 81 %, der mittlere Porendurchmesser 0,24 µm, der Anteil der Poren < 1 µm 82 % und der Anteil der Poren > 1 µm 18 %, die Reißdehnung 130 % und die Dimensionsänderung in Schwefelsäure ("Säureschrumpf") +1,0 % (Expansion).

Zur Bestimmung des durch die Schwerkraft möglicherweise entstehenden Füllprofils im Separator (Säuredrainage) wurden 20 x 400 mm lange Streifen des Separators mit Säure getränkt (3,0 g/g Säureabsorption) und senkrecht in einer mit Wasserdampf gesättigten Atmosphäre gelagert. Nach unterschiedlichen Zeiten wurden die Separatorstreifen in vier Stücke à 20 x 100 mm zerschnitten und anschließend die absorbierte Säuremenge in Abhängigkeit von der Höhe bestimmt. Selbst nach 14 Tagen wurde unabhängig von der Höhe eine gleichmäßige Säureabsorption (jeweils 3,0 g/g) gemessen.

Zur Bestimmung der Säureschichtung wurden die obere und die untere Hälfte eines Separatorstreifens (25 x 80 mm) mit Säure unterschiedlicher Dichte getränkt (Säuredichte in der oberen Hälfte: 1,6 g/cm³; untere Hälfte: 1,2 g/cm³). Der Separatorstreifen wurde senkrecht gelagert und nach unterschiedlichen Zeiten die Säuredichte in der oberen und unteren Hälfte bestimmt. Im Vergleich mit einem Glasmattenseparator sank die Säure der höheren Dichte um den Faktor 6 langsamer ab, d.h. daß die Neigung zur Ausbildung von Säureschichten mit unterschiedlichen Konzentrationen innerhalb des Separators deutlich geringer ist.

### Beispiel 7

848,4 g pyrogene Kieselsäure mit einer BET-Oberfläche von 300 m2/g und einem Primärpartikeldurchmesser von 7 nm (Aerosil® 300, Fa. Degussa), 210,0 g Polyethylen mit einem mittleren Molekulargewicht von 5,6-10⁶ g/mol (Hostalen® GUR 4130, Fa. Hoechst) und 3959 g eines naphthenischen Prozeßöls (Shellflex FC 451, Fa. Shell) wurden in einem Doppelschneckenextruder mit Breitschlitzdüse extrahiert und in einem der Düse nachgeschalteten, beheizten Walzwerk auf 1 mm Dicke kalandriert. Das Blatt wurde mit Hexan bei Raumtemperatur vollständig extrahiert. Der extrahierte Separator setzt sich aus 65,0 Vol.% Füllstoff und 35,0 Vol.% Polyethylen zusammen. Der elektrische Widerstand beträgt 120 mΩxcm², die Säureabsorption 2,8 g/g, die Porosität 81 %, der mittlere Porendurchmesser 0,24 µm, der Anteil der Poren < 1 µm 84 % und der Anteil der Poren > 1 µm 16 % und die Reißdehnung 150 %.

Der vollständig extrahierte Separator wurde in einer Zugdehnungsmaschine biaxial um jeweils 100 % gereckt. Durch das Recken erhöhte sich die Porosität auf 87 Vol.%, der mittlere Porendurchmesser auf 0,94 µm und der Anteil der großen Poren auf 48 %. Dagegen blieb die Säureabsorption mit 2,8 g/g unverändert, was darauf hindeutet, daß die durch das Recken entstandenen und vergrößerten Poren ungefüllt bleiben und somit für den Sauerstofftransfer zur Verfügung stehen.

### Beispiel 8

5,30 g pyrogene Kieselsäure mit einer BET-Oberfläche von 300 m²/g und einem Primärpartikeldurchmesser von 7 nm (Aerosil® 300, Fa. Degussa), 5,47 g Fällungskieselsäure mit einer BET-Oberfläche von 175 m²/g und einem Primärteilchendurchmesser von 18 nm (FK 320, Fa. Degussa), 1,5 g Polyethylen mit einem mittleren Molekulargewicht von 5,6·10⁶ g/mol (Hostalen® GUR 4130, Fa. Hoechst) und 38,0 g eines naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 76,6 Vol.-% Füllstoff (38,3 Vol.% pyrogene Kieselsäure und 38,3 Vol.% Fällungkieselsäure) und 23,4 Vol.-% Polyethylen zusammen. Der elektrische Wiederstand beträgt 19 mΩ·cm², die Säureabsorption 2,8 g/g und die Porosität 79 %.

### Beispiel 9

7,70 g pyrogene Kieselsäure mit einer BET-Oberfläche von 300 m²/g und einem Primärpartikeldurchmesser von 7 nm (Aerosil® 300, Fa. Degussa), 1,53 g Polyethylen mit einem mittleren Molekulargewicht von 5,6·10⁶ g/mol (Hostalen® GUR 4130, Fa. Hoechst), 30,85 g eines naphthenischen Prozeßöls (Shellflex FC 451, Fa. Shell) und 10,0 g Natriumsulfat wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dikken Blatt verpreßt. Das Blatt wurde mit Hexan bei Raumtemperatur vollständig extrahiert. Der extrahierte und in Säure getauchte Separator setzt sich aus 69,8 Vol.-% Füllstoff und 30,2 Vol.-% Polyethylen zusammen. Die Säureabsorption beträgt 3,6 g/g und die Porosität 85 %.

### Beispiel 10 (Vergleichsbeispiel)

12,39 g Fällungskieselsäure mit einer BET-Oberfläche von 175 m²/g und einem Primärpartikeldurchmesser von 18 nm (FK 320, Fa. Degussa), 1,7 g Polyethylen mit einem mittleren Molekulargewicht von 5,6·10⁶ g/mol (Hostalen® GUR 4130, Fa. Hoechst) und 36,5 g eines naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 76,6 Vol.% Füllstoff und 23,4 Vol.% Polyethylen zusammen. Der elektrische Widerstand beträgt 30 mΩ×cm², die Säureabsorption 2,2 g/g, die Porosität 75 %, der mittlere Porendurchmesser 0,16 µm, der Anteil der Poren < 1 µm 87 % und der Anteil der Poren > 1 µm 13 %. Porosität und Säureabsorption sind bei gleichem Füllstoff- und Polymergehalt deutlich geringer als bei den Beispielen 1 bis 3.

### Beispiel 11 (Vergleichsbeispiel)

9,38 g Fällungskieselsäure mit einer BET-Oberfläche von 400 m²/g (Sylobloc® 44 , Fa. Grace), 1,3 g Polyethylen mit einem mittleren Molekulargewicht von 5,6·10⁶ g/mol (Hostalen® GUR 4130, Fa. Hoechst) und 39,5 g eines naphthenischen Prozeßöls (Shellflex FC 451, Fa. Shell) wurden in einem Plastographen mit Mess-Kneter (Mess-Kneter W 50 H und Plasti-Corder PLV 151, Fa. Brabender) bei 200 °C 5 Minuten geknetet und die resultierende Mischung in einer Presse bei 170 °C zu einem 0,25 mm dicken Blatt verpreßt. Das Blatt wurde mit Hexan bei Raumtemperatur vollständig extrahiert. Der extrahierte Separator setzt sich aus 76,6 Vol.% Füllstoff und 23,4 Vol.% Polyethylen zusammen. Der elektrische Widerstand beträgt 44 mΩ×cm², die Säureabsorption 2,3 g/g, die Porosität 74 %, der mittlere Porendurchmesser 0,19 µm, der Anteil der Poren < 1 µm 81 % und der Anteil der Poren > 1 µm 19 %. Beispiel 9 und 10 zeigen, daß bei Verwendung von Fällungskieselsäure sowohl die Porosität als auch Säureabsorption der Separatoren bei gleichem Füllstoff- und Polymergehalt deutlich geringer sind als in den Beispielen 1 bis 3.

## Patentansprüche

1. Mikroporöser Batterieseparator auf Basis einer im wesentlichen homogenen Mischung aus mindestens einem thermoplastischen Polymer, mindesetns einem inerten Füllstoff und gegebenenfalls mindestens einem Weichmacher, **dadurch gekennzeichnet, daß** der Separator als Füllstoff mindestens 20 Vol.-% pyrogene Kieselsäure und ggf. einen oder mehrere weitere Füllstoffe enthält, so daß der Füllstoffgehalt insgesamt mehr als 60 bis maximal 82 Vol.-% beträgt, jeweils bezogen auf das massive Separatormaterial.

2. Batterieseparator gemäß Anspruch 1, **dadurch gekennzeichnet, daß** er mindestens 30 Vol.-% pyrogene Kieselsäure enthält.

3. Batterieseparator gemäß Anspruch 1, **dadurch gekennzeichnet, daß** er mindestens 45 Vol.-% pyrogene Kieselsäure enthält.

4. Batterieseparator gemäß Anspruch 1, **dadurch gekennzeichnet, daß** er mehr als 60 Vol.-% pyrogene Kieselsäure enthält.

5. Batterieseparator gemäß einem der Ansrüche 1 bis 4, **dadurch gekennzeichnet, daß** er als Füllstoff ausschließlich pyrogene Kieselsäure enthält.

6. Batterieseparator gemäß einem der Ansprüche 1 bis 5, **dadurch gekennzeichnet, daß** er
a) mindestens 20 Vol.-% pyrogene Kieselsäure;
b) 0 bis 62 Vol.-% sonstige Füllstoffe, wobei der Gesamtfüllstoffgehalt >60 bis 82 Vol.-% beträgt;
c) 18 bis < 40 Vol.-% thermoplastisches Polymer; und
d) bezogen auf die Gesamtmasse an Füllstoff und Polymer 0 bis 20 Gew.-% Weichmacher enthält.

7. Batterieseparator gemäß Anspruch 6, **dadurch gekennzeichnet, daß** er insgesamt 67 bis 80 Vol.-% Füllstoffe und 20 bis 33 Vol.-% thermoplastisches Polymer enthält.

8. Batterieseparator gemäß Anspruch 6 oder 7, **dadurch gekennzeichnet, daß** er 2 bis 15 Gew.-% Weichmacher enthält.

9. Batterieseparator gemäß einem der Ansprüche 1 bis 8, **dadurch gekennzeichnet, daß** das thermoplastische Polymer ultrahochmolekulares Polyolefin mit einem mittleren gewichtsmäßigen Molekulargewicht von mindestens 300 000 ist.

10. Batterieseparator gemäß Anspruch 9, **dadurch gekennzeichnet, daß** das Polyolefin ein mittleres gewichtsmäßiges Molekulargewicht von mindestens 1 · 10⁶ hat.

11. Batterieseparator gemäß Anspruch 9, **dadurch gekennzeichnet, daß** das Polyolefin ein mittleres gewichtsmäßiges Molekulargewicht von 3 bis 8 · 10⁶ hat.

12. Batterieseparator gemäß einem der Ansprüche 1 bis 11, **dadurch gekennzeichnet**, er als Weichmacher ein wasserunlösliches Öl und/oder Prozeßöl enthält.

13. Batterieseparator gemäß einem der Ansprüche 1 bis 12, **dadurch gekennzeichnet, daß** er als zusätzlichen Füllstoff gefällte Kieselsäure und/oder solche Stoffe enthält, die in dem Elektrolyten des Akkumulators löslich sind.

14. Batterieseparator gemäß einem der Ansprüche 1 bis 13, **dadurch gekennzeichnet, daß** er eine Porosität von 77 bis 90 % aufweist.

15. Batterieseparator gemäß Anspruch 14, **dadurch gekennzeichnet, daß** er eine Porosität von 78 bis 88 % aufweist.

16. Batterieseparator gemäß einem der Ansprüche 1 bis 15, **dadurch gekennzeichnet, daß** er ein Säureabsorptionsvermögen von 2,8 bis 4,0 g Säure pro g Separator (ohne Vakuum) aufweist.

17. Batterieseparator gemäß einem der Ansprüche 1 bis 16, **dadurch gekennzeichnet, daß** er eine mittlere Porengröße von 0,1 bis 0,3 µm aufweist.

18. Batterieseparator gemäß Anspruch 17, **dadurch gekennzeichnet, daß** er eine mittlere Porengröße von 0,15 bis 0,25 µm aufweist.

19. Batterieseparator gemäß einem der Ansprüche 1 bis 18, **dadurch gekennzeichnet, daß** der Anteil der Poren mit einem Durchmesser von < 1µm 80 bis 90 % und der Anteil der Poren mit einer Größe von ≥ 1µm 10 bis 20 % beträgt.

20. Batterieseparator gemäß einem der Ansprüche 1 bis 19, **dadurch gekennzeichnet, daß** er eine Reißdehnung von 50 bis 200 % aufweist.

21. Batterieseparator gemäß einem der Ansprüche 1 bis 20, **dadurch gekennzeichnet, daß** er in Säure eine Dimensionsänderung von -1% bis +2% zeigt.

22. Blei-Schwefelsäure-Akkumulator enthaltend mindestens zwei entgegengesetzt geladene Elektrodenplatten und mindestens einen Separator, **dadurch gekennzeichnet, daß** er einen Separator gemäß einem der Ansprüche 1 bis 21 enthält.

23. Blei-Schwefelsäure-Akkumulator gemäß Anspruch 22, **dadurch gekennzeichnet, daß** der Akkumulator ein geschlossener Akkumulator ist.

24. Blei-Schwefelsäure-Akkumulator gemäß Anspruch 22 oder 23, **dadurch gekennzeichnet, daß** der Akkumulator einen festgelegten Elektrolyten enthält.

25. Blei-Schwefelsäure-Akkumulator gemäß einem der Ansprüche 22 bis 24, **dadurch gekennzeichnet, daß** der oder die Separatoren eine Säuremenge enthalten, die so bemessen ist, daß der Anteil der nicht mit Säure gefüllten Poren einen Transport des an der positiven Elektrode gebildeten Sauerstoffs zur negativen Elektrode in einem solchen Umfang gewährleistet, daß kein Wasserverbrauch des Akkumulators nachweisbar ist.

## Claims

1. Microporous battery separator based on an essentially homogeneous mixture of at least one thermoplastic polymer, at least one inert filler and optionally at least one plasticizer, **characterized in that** the separator contains, as filler, at least 20 vol.-% pyrogenic silica and optionally one or more further fillers, so that the filler content overall is more than 60 up to a maximum of 82 vol.-%, in each case relative to the solid separator material.

2. Battery separator according to Claim 1, **characterized in that** it contains at least 30 vol.-% pyrogenic silica.

3. Battery separator according to Claim 1, **characterized in that** it contains at least 45 vol.-% pyrogenic silica.

4. Battery separator according to Claim 1, **characterized in that** it contains at least 60 vol.-% pyrogenic silica.

5. Battery separator according to one of Claims 1 to 4, **characterized in that** it contains exclusively pyrogenic silica as filler.

6. Battery separator according to one of Claims 1 to 5, **characterized in that** it contains
a) at least 20 vol.-% pyrogenic silica;
b) 0 to 62 vol.-% other fillers, the total filler content being > 60 to 82 vol.-%;
c) 18 to < 40 vol.-% thermoplastic polymer; and
d) relative to the total mass of filler and polymer, 0 to 20 wt.-% plasticizer.

7. Battery separator according to Claim 6, **characterized in that** in total it contains 67 to 80 vol.-% fillers and 20 to 33 vol.-% thermoplastic polymer.

8. Battery separator according to Claim 6 or 7, **characterized in that** it contains 2 to 15 wt.-% plasticizer.

9. Battery separator according to one of Claims 1 to 8, **characterized in that** the thermoplastic polymer is ultra-high-molecular-weight polyolefin with an average molecular weight by weight of at least 300 000.

10. Battery separator according to Claim 9, **characterized in that** the polyolefin has an average molecular weight by weight of at least 1 · 10⁶.

11. Battery separator according to Claim 9, **characterized in that** the polyolefin has an average molecular weight by weight of 3 to 8 · 10⁶.

12. Battery separator according to one of Claims 1 to 11, **characterized in that** it contains, as plasticizer, a water-insoluble oil and/or process oil.

13. Battery separator according to one of Claims 1 to 12, **characterized in that** it contains, as additional filler, precipitated silica and/or such substances as are soluble in the electrolyte of the accumulator.

14. Battery separator according to one of Claims 1 to 13, **characterized in that** it displays a porosity of 77 to 90%.

15. Battery separator according to Claim 14, **characterized in that** it displays a porosity of 78 to 88%.

16. Battery separator according to one of Claims 1 to 15, **characterized in that** it displays an acid-absorption capacity of 2.8 to 4.0 g acid per g separator (without vacuum).

17. Battery separator according to one of Claims 1 to 16, **characterized in that** it displays an average pore size of 0.1 to 0.3 µm.

18. Battery separator according to Claim 17, **characterized in that** it displays an average pore size of 0.15 to 0.25 µm.

19. Battery separator according to one of Claims 1 to 18, **characterized in that** the proportion of pores with a diameter of ≤ 1 µm is 80 to 90% and the proportion of pores with a size of ≥ 1 µm to 10 to 20%.

20. Battery separator according to one of Claims 1 to 19, **characterized in that** it displays an elongation at break of 50 to 200%.

21. Battery separator according to one of Claims 1 to 20, **characterized in that** it shows a change in dimension of from -1% to +2% in acid.

22. Lead-sulphuric acid accumulator containing at least two oppositely charged electrode plates and at least one separator, **characterized in that** it contains a separator according to one of Claims 1 to 21.

23. Lead-sulphuric acid accumulator according to Claim 22, **characterized in that** the accumulator is a sealed accumulator.

24. Lead-sulphuric acid accumulator according to Claim 22 or 23, **characterized in that** the accumulator contains a fixed electrolyte.

25. Lead-sulphuric acid accumulator according to one of Claims 22 to 24, **characterized in that** the separator or separators contain a quantity of acid which is such that the proportion of pores not filled with acid guarantees a transport of the oxygen formed at the positive electrode to the negative electrode to such an extent that no water consumption of the accumulator is detectable.

## Revendications

1. Séparateur microporeux pour batterie, à base d'un mélange pratiquement homogène d'au moins un polymère thermoplastique, au moins une matière de charge inerte et le cas échéant au moins un agent plastifiant, **caractérisé en ce que** le séparateur contient comme matière de charge au moins 20% en. volume d'acide silicique pyrogène et le cas échéant une ou plusieurs autres matières de charge, de façon que la teneur en matières de charge totales se situe dans la plage de plus de 60% à 82% en volume maximum, toujours ramenée au matériau de séparateur massif.

2. Séparateur pour batterie selon la revendication 1, **caractérisé en ce qu'**il contient au moins 30% en volume d'acide silicique pyrogène.

3. Séparateur pour batterie selon la revendication 1, **caractérisé en ce qu'**il contient au moins 45% en volume d'acide silicique pyrogène.

4. Séparateur pour batterie selon la revendication 1, **caractérisé en ce qu'**il contient plus de 60% en volume d'acide silicique pyrogène.

5. Séparateur pour batterie selon l'une des revendications 1 à 4, **caractérisé en ce qu'**il contient comme matière de charge exclusivement de l'acide silicique pyrogène.

6. Séparateur pour batterie selon l'une des revendications 1 à 5, **caractérisé en ce qu'**il contient
a) au moins 20% en volume d'acide silicique pyrogène ;
b) de 0 à 62% en volume d'autres matières de charge, la teneur en matières de charge totales allant de plus de 60% à 82% en volume ;
c) de 18 à moins de 40% en volume de polymère thermoplastique; et
d) de 0 à 20% en poids d'agent plastifiant, ramené à la masse totale de la matière de charge et du polymère.

7. Séparateur pour batterie selon la revendication 6, **caractérisé en ce qu'**il contient au total de 67 à 80% en volume de matières de charge et de 20 à 33% en volume de polymère thermoplastique.

8. Séparateur pour batterie selon la revendication 6 ou la revendication 7, **caractérisé en ce qu'**il contient de 2 à 15% en poids d'agent plastifiant.

9. Séparateur pour batterie selon l'une des revendications 1 à 8, **caractérisé en ce que** le polymère thermoplastique de masse moléculaire ultra-élevée est une polyoléfine ayant une masse moléculaire moyenne en poids au moins égale à 300 000.

10. Séparateur pour batterie selon la revendication 9, **caractérisé en ce que** la polyoléfine a une masse moléculaire moyenne en poids au moins égale à 1 · 10⁶.

11. Séparateur pour batterie selon la revendication 9, **caractérisé en ce que** la polyoléfine a une masse moléculaire moyenne en poids de 3 à 8 · 10⁶.

12. Séparateur pour batterie selon l'une des revendications 1 à 11, **caractérisé en ce qu'**il contient comme agent plastifiant une huile insoluble dans l'eau et/ou une huile plastifiante.

13. Séparateur pour batterie selon l'une des revendications 1 à 12, **caractérisé en ce qu'**il contient comme matière de charge supplémentaire de l'acide silicique précipité et/ou des substances qui sont solubles dans l'électrolyte de l'accumulateur.

14. Séparateur pour batterie selon l'une des revendications 1 à 13, **caractérisé en ce qu'**il présente une porosité de 77 à 90%.

15. Séparateur pour batterie selon la revendication 14, **caractérisé en ce qu'**il présente une porosité de 78 à 88%.

16. Séparateur pour batterie selon l'une des revendications 1 à 15, **caractérisé en ce qu'**il présente une capacité d'absorption d'acide de 2,8 à 4,0 g d'acide par g de séparateur (sans vide).

17. Séparateur pour batterie selon l'une des revendications 1 à 16, **caractérisé en ce qu'**il présente une taille de pores moyenne de 0,1 à 0,3 µm.

18. Séparateur pour batterie selon la revendication 17, **caractérisé en ce qu'**il présente une taille de pores moyenne de 0,15 à 0,25 µm.

19. Séparateur pour batterie selon l'une des revendications 1 à 18, **caractérisé en ce que** la proportion des pores de diamètre inférieur ou égal à 1 µm est de 80 à 90% et la proportion des pores ayant une taille supérieure ou égale à 1 µm est de 10 à 20%.

20. Séparateur pour batterie selon l'une des revendications 1 à 19, **caractérisé en ce qu'**il présente une élongation à la rupture de 50 à 200%.

21. Séparateur pour batterie selon l'une des revendications 1 à 20, **caractérisé en ce qu'**il présente une variation dimensionnelle dans l'acide de -1% à +2%.

22. Accumulateur au plomb/acide sulfurique contenant au moins deux plaques électrodes de charges opposées et au moins un séparateur, **caractérisé en ce qu'**il contient un séparateur selon l'une des revendications 1 à 21.

23. Accumulateur au plomb/acide sulfurique selon la revendication 22, **caractérisé en ce que** l'accumulateur est un accumulateur étanche.

24. Accumulateur au plomb/acide sulfurique selon la revendication 22 ou 23, **caractérisé en ce que** l'accumulateur contient un électrolyte déterminé.

25. Accumulateur au plomb/acide sulfurique selon l'une des revendications 22 à 24, **caractérisé en ce que** le ou les séparateurs contiennent une quantité d'acide telle que la proportion des pores non remplis d'acide garantit un transport de l'oxygène qui se forme au niveau de l'électrode positive vers l'électrode négative dans une mesure telle qu'il n'y a pas de consommation d'eau notable dans l'accumulateur.
